Europäisches Patentamt

European Patent Office

Office européen des brevets

(11) Numéro de publication: **0 189 015**
A1

# (12) DEMANDE DE BREVET EUROPEEN

(21) Numéro de dépôt: **85870115.4**

(22) Date de dépôt: **14.08.85**

(51) Int. Cl.⁴: **A 01 D 23/02**, A 01 D 23/06

(30) Priorité: **23.01.85 BE 901552**

(43) Date de publication de la demande: **30.07.86**
**Bulletin 86/31**

(84) Etats contractants désignés: **DE FR IT NL**

(71) Demandeur: **AGRI-SERVICE Sprl, Place, 58c, B-7564 Molembaix (BE)**

(72) Inventeur: **Dutrieux, Jean, 58c Place, B-7564 Molenbaix (BE)**

(54) **Dispositif tâteur de tubercules en vue du décolletage et/ou de l'effeuillage.**

(57) L'invention se rapporte au décolletage des tubercules et principalement des betteraves.

Cette opération se fait au moyen de rotors (12) décolleteurs indépendants l'un de l'autre; ceux-ci se situent entre les patins de guidage (I) et la hauteur de coupe du collet est déterminée par un palpeur présentant une fente décroissante en forme de V dont la pointe est dirigée dans le sens de la marche.

ACTORUM AG

0 189 015

## Dispositif tâteur de tubercules en vue du décolletage et/ou de l'effeuillage

La présente invention concerne un dispositif tâteur de tubercules en vue du décolletage et/ou de l'effeuillage, en particulier de la betterave.

Le procédé actuel de récolte s'oriente vers les machines qui travaillent six rangs.

Suivant le procédé classique, les feuilles sont enlevées par un rotor à fléaux dénommé rotor effeuilleur; La hauteur de coupe étant identique pour chaque rang.

Ensuite, suivent six scalpeurs indépendants munis de peigne tâteur et d'un couteau fixe qui coupe le collet et le laisse au sol.

Nous connaissons les couteaux fixes et actionnés appelés scalpeurs rotatifs qui permettent une vitesse d'avancement plus rapide mais le poids et le prix de revient élevés ont annihilé son utilisation.

Les inconvénients des scalpeurs classiques sont bien connus : vitesse d'avancement réduite, imperfection du décolletage de betteraves basses ou buttées et inefficacité dans les semis envahis de mauvaises herbes.

La plupart de ces inconvénients étant dûs aux couteaux fixes nécessitant remplacement et affûtages fréquents.

Notre objet d'invention permet, après le passage du rotor dit effeuilleur (13), l'entrée en action de six petits rotors à fléaux indépendants; c'est-à-dire six rotors décolleteurs. Ce petit rotor (12) est situé dans les patins de guidage (1) et fixé à charnière sur l'axe (3) du rotor effeuilleur, la transmission (10) transmet le mouvement au rotor (12). Le tâteur (4) présente une fente décroissante (5) en forme de V dont la pointe se dirige dans le sens de marche de la machine.

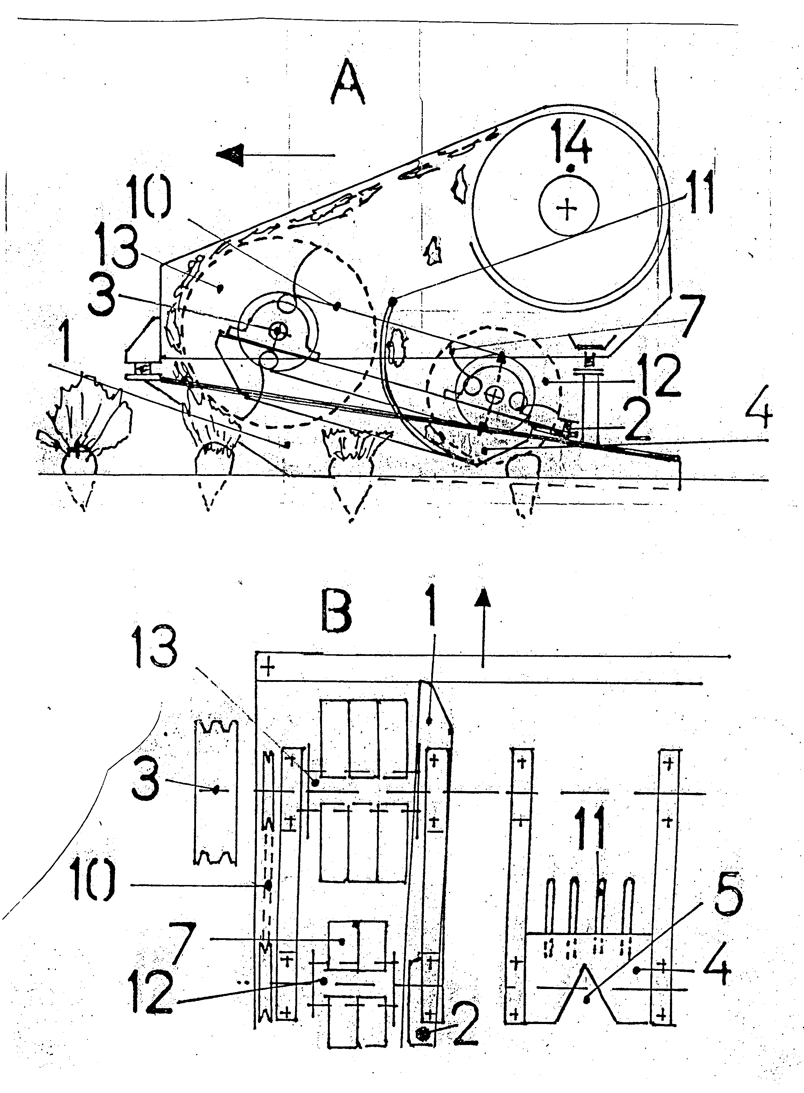

La figure A est une vue de coupe et B une vue de plan.

La forme du tâteur permet au rotor de s'abaisser sur les betteraves basses et de se relever au contact de betteraves hautes. Le patin (1) est solidaire des supports de l'axe (3) et réglable. Il sert de guide au tâteur afin d'assurer l'exactitude de l'emplacement de sa fente et aussi d'appui de butée basse (2), ceci en vue d'éviter aux fléaux (7) de se trouver en contact avec le sol. La grille (11) prolonge le tâteur (4) et dissocie le collet de certains éléments tels la terre et de petites pierres et oriente le produit dans la vis d'évacuation (14).

Le nouveau procédé détient de nombreux avantages :
- impossibilité de recouper une tranche dans les hautes betteraves
- vitesse d'avancement plus élevée
- agressivité accrue vis-à-vis des betteraves basses
- efficacité sur les terres envahies de mauvaises herbes
- les fléaux libres s'escamotent en cas d'obstacle(s) D'autre part, cet ensemble décrit a la possibilité de récupérer les collets. Pour la récolte de certains tubercules à feuillage souple et peu abondant, toujours le même ensemble peu, avec une fente de tâteur appropriée, fonctionner sans le rotor dit effeuilleur.

Bien entendu, diverses modifications peuvent être apportées par l'homme de l'art à la machine qui vient d'être décrite uniquement à titre d'exemple non limitatif sans sortir du cadre de l'invention.

Revendications

1. Dispositif tâteur (4) de scalpeurs dont la fente est calibrée (5) pour déterminer la hauteur de coupe des fléaux (7).

2. Dispositif tel que décrit ci-dessus complété d'un organe de coupe (rotatif avec les couteaux libres (7)).

3. Dispositif scalpeur décrit ci-dessus dont le tâteur (4) est prolongé d'une grille de déflexion (11).

4. Machine dont le dispositif scalpeur est disposé dans les patins de guidage d'arrachage.

5. Rotor de décolletage (12) dont la charnière est l'axe du rotor (13).

6. Dispositif décrit dont les rotors projettent séparément et directement dans le même organe d'évacuation.

7. Machine décrite dont les rotors projettent la matière au moins à 90° par rapport au sens de marche et à l'horizontale .

A

B

# RAPPORT DE RECHERCHE EUROPEENNE

**Office européen des brevets**

**0 189 015**

EP 85 87 0115

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl.4) |
|---|---|---|---|
| X | FR-E- 56 225 (O. CAPELLE) <br> * En entier * | 1 | A 01 D 23/02 <br> A 01 D 23/06 |
| Y | --- | 2 | |
| Y | FR-A-2 283 628 (FRANZ KLEINE) <br> * Figure 6; revendication 9 * <br> --- | 2 | |
| X | GB-A- 990 568 (J.M. REEKIE) <br> * Figure 1; figure 3; revendication 1 * <br> --- | 5 | |
| X | BE-A- 899 062 (AGRI-SERVICE SPRL) <br> * Figure 1 * <br> --- | 6,7 | |
| A | FR-A-1 601 397 (LUCAS) <br> * Revendications 1,5; figure 2 * <br> ----- | 1 | |

**DOMAINES TECHNIQUES RECHERCHES (Int. Cl.4)**

A 01 D

Le présent rapport de recherche a été établi pour toutes les revendications

| Lieu de la recherche | Date d'achèvement de la recherche | Examinateur |
|---|---|---|
| LA HAYE | 30-01-1986 | VON ARX V.U. |